# FASCICULE DE BREVET EUROPEEN

(11) **EP 2 266 844 B1**
(45) Date de publication et mention de la délivrance du brevet: **18.01.2012**
(21) Numéro de dépôt: 10163356.8
(22) Date de dépôt: 20.05.2010
(51) Int. Cl.: B60R 13/00, B29C 63/02

(54) **Dispositif pour la pose de films adhésifs souples sur un véhicule automobile**
Vorrichtung zum Anbringen flexibler klebender Folien an Motorfahrzeugen
Device for applying flexible adhesive films to an automotive vehicle

(30) Priorité: 17.06.2009 FR 0954057
(43) Date de publication de la demande: 29.12.2010
(73) Titulaire: Peugeot Citroën Automobiles SA, 78140 Vélizy-Villacoublay (FR)
(72) Inventeur: Crosnier, Christophe, 27810, Marcilly Sur Eure (FR); Rousseau, Nicolas, 94110, Arcueil (FR); Crinquette, Antoine, 59221, Bauvin (FR)

(56) Documents cités:
- EP-A1- 1 867 488
- DE-A1- 3 740 972
- JP-A- 2009 018 762
- US-A- 3 935 353
- US-A1- 2006 040 078
- US-A1- 2009 115 214
- AVERY DENNISON: "Application Methods for Avery R self-adhesive films" , [Online] pages 1-10, XP002524599 Extrait de l'Internet: URL:http://www.europe.averygraphics.com/Te chBullDocs/TB%201.4%20Applicati on%20methods%20for%20Avery%20self-adhesive %20films.pdf> [extrait le 2001-02-02]

## Description

La présente invention se rapporte à un dispositif pour la pose d'un film adhésif sur la carrosserie d'un véhicule automobile.

Il est connu dans le domaine de l'automobile d'avoir recours à des films adhésifs pour, par exemple, appliquer des éléments décoratifs sur la carrosserie d'un véhicule afin de la personnaliser. On préfère le plus souvent utiliser de tels films adhésifs, plutôt que de réaliser ces motifs lors de la peinture, ce qui évite d'avoir recours à l'utilisation de caches pour masquer les parties d'éléments de carrosserie qui doivent rester inchangées.

Les techniques connues pour la pose de films adhésifs requièrent souvent la présence de plusieurs opérateurs et sont particulièrement inadaptées à la pose de films de grands formats de manière rapide. Le plus souvent, les motifs de grand format consistent en l'association de plusieurs éléments de décor, qu'il est nécessaire d'ajuster les uns par rapport aux autres. On a donc ainsi un grand nombre de raccords entre les différents éléments du décor, ce qui complique considérablement la pose. Ainsi, les techniques de pose de films adhésifs souples de la technique antérieure ne sont pas adaptées à la pose en grande série, avec une cadence de production élevée, de panneaux adhésifs de grande taille.

La présente invention a pour but de pallier tout ou partie des inconvénients précédemment évoqués.

On atteint ce but de l'invention, selon un premier aspect, avec un dispositif selon la revendication 1, dispositif pour la pose d'au moins un film adhésif souple sur au moins une partie d'au moins un élément de carrosserie d'un véhicule automobile, ce dispositif comprenant :
- un cadre ;
- au moins un organe d'appui solidaire dudit cadre, apte à permettre une indexation dudit cadre par rapport audit élément de carrosserie ;
   caractérisé en ce que au moins un pion est monté articulé sur ledit cadre entre une position dite de tension, dans laquelle ledit pion est apte à maintenir ledit film en tension avant indexation dudit cadre sur ledit élément de carrosserie, et une position dite de relâchement, dans laquelle ledit pion est apte à relâcher la tension, au moins en partie, dudit film lorsque ledit cadre est indexé sur ledit élément de carrosserie ; et
- des moyens élastiques de rappel dudit pion vers sa position de tension.
Le document JP-A-2009 018762 décrit le préambule de la revendication 1.

Un tel agencement est particulièrement avantageux étant donné qu'il permet de positionner facilement, et de manière sûre, le film par rapport aux éléments de carrosserie à recouvrir. L'organe d'appui permet de garantir une position stable du cadre, sur lequel est tendu le film adhésif, par rapport à la partie du véhicule à recouvrir. Le pion permet de retenir le film sous tension dans le cadre pendant la pose.

La tension sur le film est exercée par un moyen de rappel élastique du pion, de sorte que, lorsque l'opérateur procède au collage du film sur l'élément de carrosserie en appliquant une pression sur le film, avec par exemple une raclette, il provoque le pivotement du pion qui s'incline de manière à garder une tension optimale sur les parties du film libres par rapport à la carrosserie. Ceci permet à l'opérateur d'achever plus aisément le collage de l'ensemble des parties adhésives qu'il lui reste à poser.

Le relâchement de la tension provoqué par le basculement progressif du pion de sa position de tension vers sa position de relâchement, facilite la libération du film de son cadre de pose, lorsque l'opérateur a terminé le collage du film.

On comprend aisément qu'un tel cadre est tout à fait approprié pour le collage de films de grande dimension, tels que des panneaux de grandes tailles composés d'une ou plusieurs pièces de grandes dimensions, qui peuvent être ainsi posées sur le véhicule rapidement avec le maximum de précision. Idéalement, la surface de pose de films est comprise entre 1000 x 1200 et 1000 x 2000 millimètres carrés. On évite de la sorte de devoir coller un grand nombre d'éléments de petites tailles avec un nombre important de raccords, occasionnant des erreurs et une perte de temps.

Grâce au dispositif selon l'invention décrit ci-avant, on peut facilement coller des décors de grand format, avec un faible nombre de raccords.

Le terme « indexation » au sens de la présente invention signifie la mise en appui d'un ou plusieurs éléments du cadre sur un ou plusieurs éléments de carrosserie du véhicule, de manière à bloquer un ou plusieurs mouvements en translation et/ou en rotation du cadre (suppression de degrés de liberté) par rapport à la carrosserie. Il peut également s'agir d'un blocage de telles possibilités de mouvement par insertion d'un élément du cadre entre au moins deux éléments de carrosserie d'un véhicule. L'indexation d'un des organes d'appui du cadre sur la carrosserie peut se faire, par exemple, entre un pavillon et un volet supérieur, sur les côtés d'habitacle de pavillon, sur les enjoliveurs de gouttière de pavillon, ainsi que sur les gouttières elles-mêmes.

Suivant d'autres caractéristiques optionnelles du dispositif de pose d'au moins un film adhésif souple selon la présente invention :
- ledit pion est monté pivotant sur au moins une bielle et sur une tige sur laquelle agissent lesdits moyens de rappel élastique ;
- la position de relâchement est une position dans laquelle le pion autorise l'échappement dudit film ;
- lesdits pions sont répartis par groupes de deux sur ledit cadre de telle sorte qu'ils sont aptes à maintenir au moins un film, de forme sensiblement rectangulaire, par ses angles ;
- les organes d'appui sont des patins d'appui aptes à coopérer avec ledit élément de carrosserie de manière à assurer une position isostatique dudit cadre par rapport audit élément de carrosserie :
   un tel maintien immobile du cadre par rapport à l'élément de carrosserie facilite grandement la pose du film ;
- ledit élément de carrosserie est un pavillon, et les organes d'appui comprennent quatre patins d'appui aptes à s'indexer sur les côtés d'habitacle du pavillon, et comprennent en outre un index escamotable destiné à être inséré en partie entre le pavillon et un volet supérieur ;
- selon une première alternative, ledit élément de carrosserie est un pavillon, et les organes d'appui comprennent, d'une part, deux patins d'appui aptes à s'indexer sur un des côtés d'habitacle du pavillon, et, d'autre part, deux autres patins d'appui adaptés pour coopérer avec une gouttière du pavillon, et comprennent en outre un organe d'appui destiné à coopérer avec un diabolo arrière situé du côté de ladite gouttière : un tel agencement permet d'éviter le plus possible d'endommager la carrosserie, car les patins coopèrent avec des parties non visibles, en l'occurrence la gouttière, une fois l'opération de pose terminée et l'enjoliveur remis en place dans la gouttière ;
- selon une autre alternative, ledit élément de carrosserie est un pavillon, et les organes d'appui comprennent, d'une part, quatre patins d'appui aptes à s'indexer sur les côtés d'habitacle du pavillon, et, d'autre part, quatre autres patins d'appui adaptés pour coopérer avec les côtés du pavillon, et comprennent en outre un index escamotable destiné à être inséré en partie entre le pavillon et un volet supérieur ;
- selon encore une autre alternative, ledit élément de carrosserie est un pavillon, et les organes d'appui comprennent quatre patins d'appui aptes à s'indexer sur les côtés d'habitacle du pavillon et adaptés pour coopérer avec les côtés du pavillon, et comprennent en outre un index escamotable destiné à être inséré en partie entre le pavillon et un volet supérieur.

Selon un deuxième aspect, la présente invention se rapporte à un procédé mettant en oeuvre un dispositif conforme à l'un quelconque des dispositifs précédemment décrits, pour l'application d'un film adhésif sur un pavillon de véhicule, ledit film étant recouvert d'un papier support, qui est retiré au cours de la pose dudit film sur ledit pavillon.

Le terme « volet supérieur » au sens de la présente invention définit un élément de carrosserie situé sur la partie la plus haute de la portière de malle arrière d'un véhicule.

Le terme « pavillon » désigne la face extérieure du toit d'un véhicule automobile.

Le terme « gouttière de pavillon » définit un élément de structure du véhicule permettant de lier le côté d'habitacle au pavillon. Cette zone sert également à l'aménagement des zones de fixations des équipements comme les barres de toit par exemple.

Le terme « côté d'habitacle du pavillon » définit un élément de carrosserie positionné sur les côtés du véhicule. Il s'agit généralement d'une pièce de tôlerie emboutie en une seule partie composant l'aile arrière et, la ou les entrées de portes.

Le terme « côté de pavillon » sur les bords latéraux du pavillon, définit la partie de tôle emboutie et pliée sur le pourtour du pavillon. Il s'agit notamment d'une zone de référence pour l'alignement et le positionnement des décors dans le cadre de l'invention.

Le terme « isostatique » désigne le maintien immobile d'un premier ensemble par rapport à un deuxième ensemble, par blocage de tous les degrés de liberté.

Le terme « diabolo » définit les ergots soudés dans la tôle de la gouttière de pavillon, prévus d'origine pour monter certaines barres de toit transversales.

La présente invention sera mieux comprise à la lecture de la description détaillée qui va suivre illustrée à l'aide des figures annexées, dans lesquelles :
- les figures 1, 6 et 7 représentent une vue générale de dessus de différentes variantes d'un dispositif selon l'invention en place sur le pavillon et sur le volet supérieur d'un véhicule ;
- les figures 2 à 5 représentent, de manière schématique, un pion articulé faisant partie du dispositif selon l'invention, dans différentes positions de fonctionnement ;
- les figures 8 et 9 représentent, respectivement en perspective et de profil, une vue de détail d'un patin d'appui faisant partie d'un dispositif selon l'invention en position sur un côté d'habitacle et sur un côté de pavillon de véhicule.

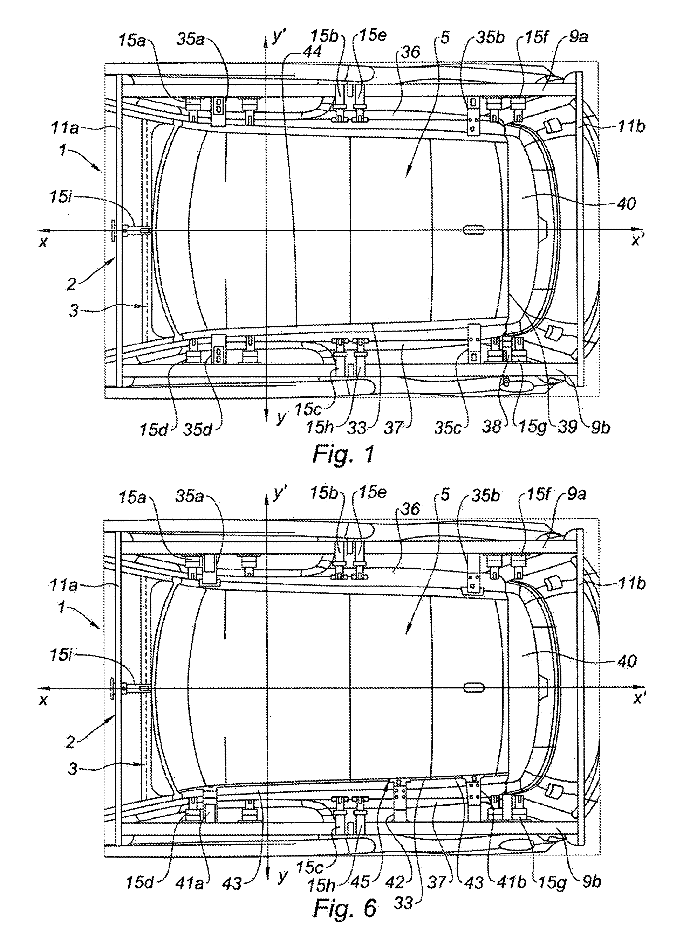

La figure 1 représente un dispositif 1 de pose de film adhésif souple comprenant un cadre 2 selon l'invention. Ce mode de réalisation est particulièrement adapté à la pose de films adhésifs souples 3 sur le pavillon d'un véhicule 5. Le cadre 2 de forme sensiblement rectangulaire, illustré sur la figure 1, est composé principalement de deux barres métalliques longitudinales 9a et 9b (c'est-à-dire s'étendant suivant une direction sensiblement parallèle à l'axe longitudinal du véhicule XX'), et de deux barres transversales 11 a et 11 b (c'est-à-dire s'étendant suivant une direction sensiblement parallèle à la direction transversale du véhicule YY').

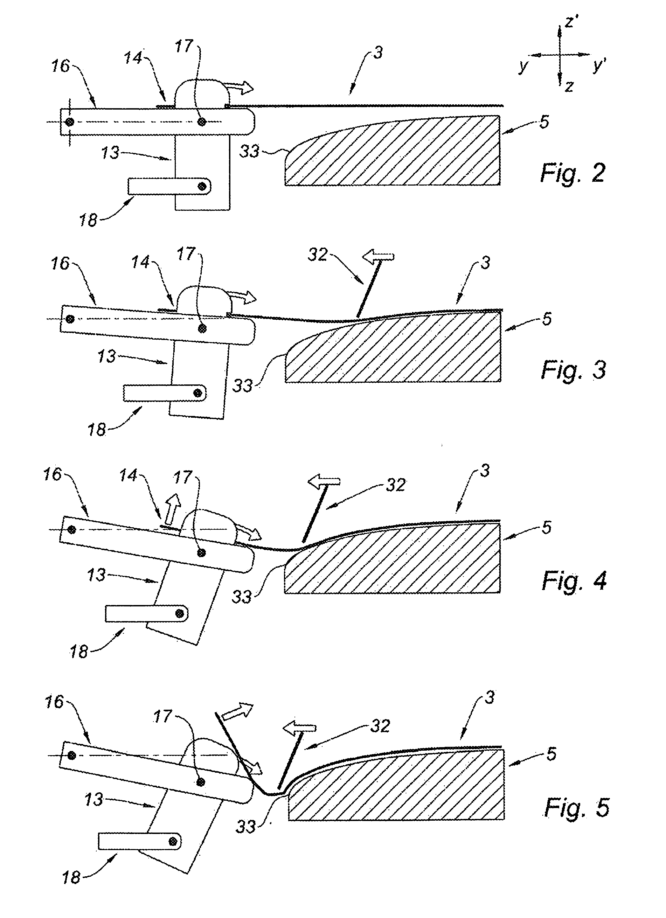

Des pions 13 (illustrés sur les figures 2 à 5) montés sur le cadre 2 sont destinés à coopérer avec des orifices 14 correspondants ménagés dans le film 3. Ces pions 13 sont situés de préférence par groupe de deux en vis-à-vis sur les barres 9a, 9b.

Ces pions sont articulés sur des platines 15 elles-mêmes fixées sur les barres 9a, 9b.

La disposition des pions 13 par rapport au cadre 2 est dépendante du nombre de films 3 que l'on doit poser sur le pavillon. Pour la pose de deux films 3 contigus sur le pavillon, telle que représentée sur les figures 1, 6 et 7, la disposition idéale correspond à deux groupes de quatre platines 15a, 15b, 15c, 15d, 15e, 15f, 15g, 15h placés chacun sur une des barres longitudinales 9a et 9b du cadre, et en vis-à-vis.

Idéalement encore, pour la pose de deux films contigus, deux platines 15b et 15e (ou 15c et 15h), sont rapprochées aux milieux des barres longitudinales 9a et 9b comme illustré sur les figures 1, 6 et 7. Une platine 15i peut également être placée sur une barre transversale 11 a, de préférence de manière à être positionnée à l'avant du pavillon 5.

Les pions 13, selon le mode de réalisation illustré en particulier sur les figures 2 à 5, sont montés articulés sur leurs platines respectives 15 chacun par l'intermédiaire d'une bielle 16. On peut également prévoir de doubler la bielle 16 par une deuxième bielle identique, pour maintenir la base du pion 13 comme dans un étau entre deux points pivots par lesquels passe l'axe du pivot 17.

Des tiges 18, montées par exemple pivotantes sur chaque pion 13 et coulissantes par rapport aux platines 15, et coopérant avec des moyens élastiques, tels que des ressorts (non représentés), rappellent ces pions 13 vers une position de tension représentée à la figure 2.

Grâce à un tel agencement du pion 13 par rapport à la bielle 16 et à la tige 18, lorsque l'opérateur applique une pression sur le film 3 au moyen d'une raclette 32 (voir figures 3 à 5) pour coller le film 3 sur le centre du pavillon, ceci provoque une action sur le pion 13 : ce pion 13 passe de la position verticale de tension représentée sur la figure 2, où le film 3 est maintenu tendu horizontalement au dessus du pavillon 5, à une première position inclinée intermédiaire représentée sur la figure 3. Cette première position intermédiaire permet de garder sensiblement constante la tension sur les parties du film 3 non collées et positionnées entre le pion 13 et le pavillon 5.

On notera que dans une telle position intermédiaire, l'axe du pion 13 est toujours orienté suivant une direction sensiblement perpendiculaire au plan moyen de la partie de film adhésif souple 3 restant à coller.

La tension sur le film est assurée à l'aide des moyens de rappel élastique susmentionnés de la tige. Une telle tension sur le film permet à l'opérateur d'étaler plus facilement le film adhésif 3, en direction des côtés de pavillon 33, sur les bords du pavillon 5 du véhicule qu'il lui reste à couvrir. Un tel maintien en tension du film tout au long de la pose évite la formation de bulles d'air entre le film adhésif souple 3 et le pavillon 5, et facilite la pose.

Un tel dispositif est approprié pour la pose de films 3 adhésifs recouverts d'un papier support, qui est retiré par l'opérateur au cours de la pose sur le pavillon.

En continuant le collage du film 3 en direction des bords du pavillon, la pression exercée par la raclette 32 de l'opérateur sur le film permet de faire passer le pion 13 de la première position intermédiaire, à une deuxième position intermédiaire, illustrée sur la figure 4, où les bords du film 3 engagés autour du pion 13 sont légèrement soulevés.

En continuant l'application du film vers les bords du pavillon avec la raclette 32, l'opérateur arrive sur un côté de pavillon 33. Arrivant à ce niveau sur la carrosserie, l'opérateur imprime une pression suffisante avec la raclette 32 pour faire passer le pion 13 dans une troisième position, dite position de relâchement, illustrée sur la figure 5, dans laquelle le film se décroche naturellement du pion 13. A ce stade, la pose du film adhésif 3 est finie. On peut prévoir que les parties du film 3 comprennant les orifices 14 de perçage ne comprennent que le papier support (non adhésif), étant donné que cette zone n'est en principe pas destinée à être collée sur le véhicule.

Le cadre 2 comprend, par ailleurs, des organes d'appui afin de permettre à ce cadre de venir en appui sur la partie haute de la carrosserie du véhicule. Ces éléments d'appui peuvent être quatre patins d'appui 35a, 35b, 35c et 35d disposés sur les barres longitudinales 9a, 9b, comme illustré sur la figure 1, qui viennent prendre appui sur les côtés d'habitacle 36 et 37 de sorte qu'ils sont le plus espacés possible les uns des autres sur le pavillon du véhicule.

Une telle disposition des patins d'appui 35a, 35b, 35c et 35d bloque d'une part deux degrés de liberté, respectivement en translation et en rotation suivant la direction transversale YY', et d'autre part, deux autres degrés de liberté, respectivement en translation et en rotation suivant la direction verticale ZZ'.

Le cadre peut comprendre en outre un index escamotable 38 indexé entre un volet supérieur 40 et le pavillon 5. Cet index escamotable 38 bloque les deux derniers degrés de liberté suivant la direction longitudinale XX', assurant ainsi une position isostatique du dispositif par rapport à la carrosserie du véhicule.

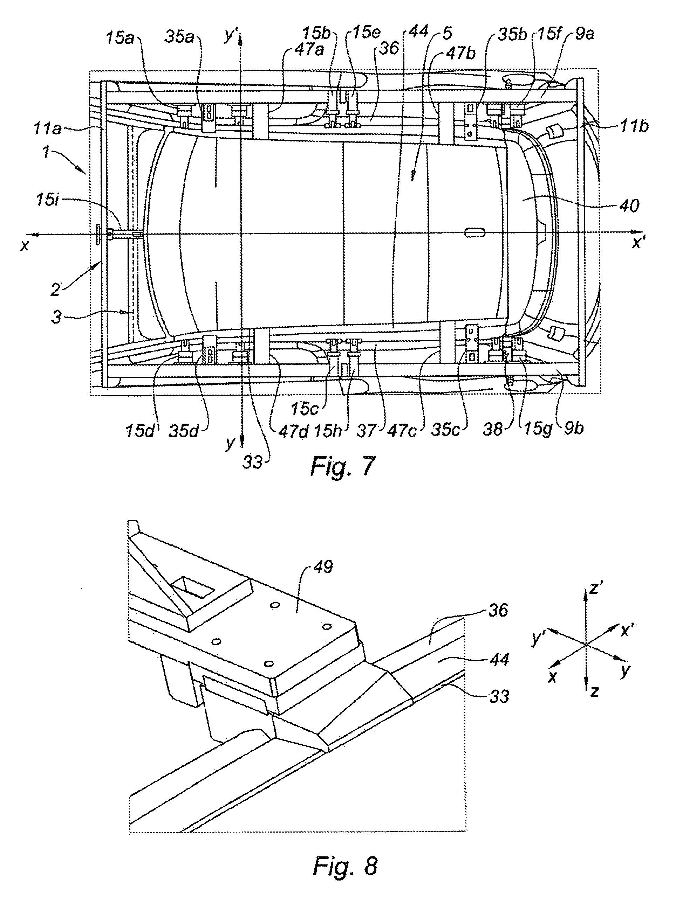

D'autres solutions sont également envisageables pour assurer une position isostatique du cadre 2 de pose par rapport au pavillon 5. De manière à endommager le moins possible de manière apparente la peinture des éléments de carrosserie sur lesquels le dispositif 1 de pose vient en appui, on peut, en variante représentée à la figure 6, indexer trois organes d'appui 41 a, 41 b et 42 dans une gouttière 43 du pavillon 5. L'enjoliveur 44 (voir figure 8) de la gouttière destinée à recevoir les organes 41 a, 41 b et 42 est préalablement retiré. Les organes d'appui comprennent deux patins 41 a, 41 b prévus pour s'indexer dans la gouttière 43, et un organe d'appui 42 prévu pour coopérer avec le diabolo arrière gauche 45. En outre, comme illustré sur la figure 6, le dispositif comprend deux patins d'appui 35a et 35b prévus pour prendre appui sur le côté d'habitacle 36 qui n'est pas contigu à la gouttière 43 sans enjoliveur 44. Un tel agencement des organes d'appui garantit une position isostatique du dispositif 1 par rapport au véhicule.

On peut également prévoir, selon une autre variante représentée à la figure 7, un dispositif selon l'invention avec un index escamotable 38 identique à celui de l'exemple illustré sur la figure 1, avec quatre patins d'appui 35a, 35b, 35c et 35d qui viennent en appui sur les côtés d'habitacles 36 et 37, et en outre quatre patins supplémentaires 47a, 47b, 47c et 47d qui sont conçus pour venir prendre appui sur les côtés de pavillon 33.

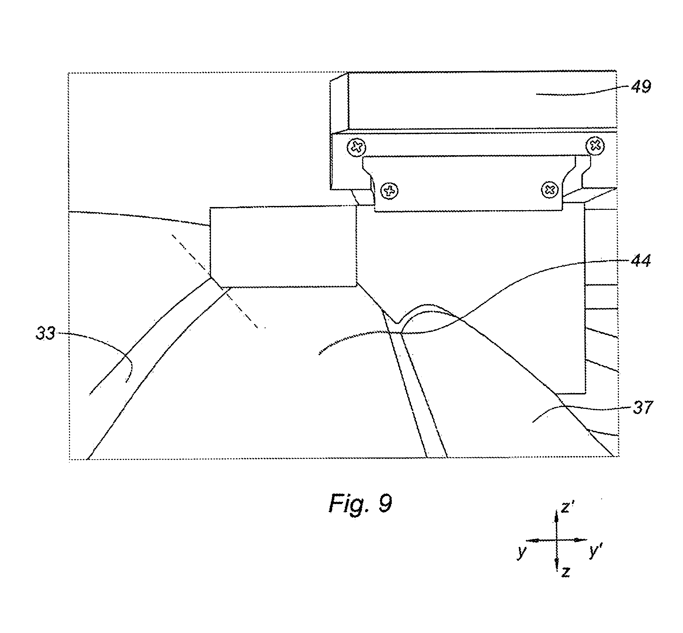

Selon encore une autre variante, dont une vue de détail d'un patin d'appui est représentée à la figure 8 et à la figure 9, on peut utiliser un dispositif du type de celui illustré à la figure 1, mais dont quatre patins d'appui 49, en plus de coopérer avec les côtés d'habitacles 36 et 37 du pavillon, viennent réagir en appui sur les côtés de pavillon 33.

Bien entendu, la présente invention n'est nullement limitée aux modes de réalisation décrits et représentés, fournis à titre de simples exemples.

## Revendications

1. Dispositif (1) pour la pose d'au moins un film (3) adhésif souple sur au moins une partie d'au moins un élément de carrosserie (5) d'un véhicule automobile, ce dispositif comprenant :
- un cadre (2) ;
- au moins un organe d'appui solidaire dudit cadre (2), apte à permettre une indexation dudit cadre (2) par rapport audit élément de carrosserie (5) ; **caractérisé en ce que** au moins un pion (13) est monté articulé sur ledit cadre (2) entre une position dite de tension, dans laquelle ledit pion (13) est apte à maintenir ledit film (3) en tension avant indexation dudit cadre (2) sur ledit élément de carrosserie (5), et une position dite de relâchement, dans laquelle ledit pion (13) est apte à relâcher la tension, au moins en partie, dudit film (3) lorsque ledit cadre est indexé sur ledit élément de carrosserie (5) ; et
- des moyens élastiques de rappel dudit pion (13) vers sa position de tension.

2. Dispositif selon la revendication 1, dans lequel ledit pion (13) est monté pivotant sur au moins une bielle (16) et sur une tige (18) sur laquelle agissent lesdits moyens de rappel élastique.

3. Dispositif selon les revendications 1 ou 2, **caractérisé en ce que** la position de relâchement est une position dans laquelle le pion (13) autorise l'échappement dudit film (3).

4. Dispositif selon l'une quelconque des revendications précédentes, **caractérisé en ce que** lesdits pions (13) sont répartis par groupes de deux sur ledit cadre de telle sorte qu'ils sont aptes à maintenir au moins un film (3), de forme sensiblement rectangulaire, par ses angles.

5. Dispositif selon l'une quelconque des revendications précédentes, **caractérisé en ce que** les organes d'appui sont des patins d'appui (35a, 35b, 35c, 35d, 41 a, 41 b, 47a, 47b, 47c, 47d et 49) aptes à coopérer avec ledit élément de carrosserie (5) de manière à assurer une position isostatique dudit cadre (2) par rapport audit élément de carrosserie (5).

6. Dispositif selon la revendication 5, **caractérisé en ce que** ledit élément de carrosserie est un pavillon (5), et **en ce que** les organes d'appui comprennent quatre patins d'appui (35a, 35b, 35c et 35d) aptes à s'indexer sur les côtés d'habitacle (36, 37) du pavillon, et comprennent en outre un index escamotable (38) destiné à être inséré en partie entre le pavillon (25) et un volet supérieur (40).

7. Dispositif selon la revendication 5, **caractérisé en ce que** ledit élément de carrosserie est un pavillon (5), et **en ce que** les organes d'appui comprennent, d'une part, deux patins d'appui (35a et 35b) aptes à s'indexer sur un des côtés d'habitacle (36, 37) du pavillon, et, d'autre part, deux autres patins d'appui (41 a et 41 b) adaptés pour coopérer avec une gouttière (43) du pavillon, et comprennent en outre un organe d'appui (42) destiné à coopérer avec un diabolo arrière (45) situé du côté de ladite gouttière (43).

8. Dispositif selon la revendication 5, **caractérisé en ce que** ledit élément de carrosserie est un pavillon (5), et **en ce que** les organes d'appui comprennent, d'une part, quatre patin d'appui (35a, 35b, 35c et 35d) aptes à s'indexer sur les côtés d'habitacle (36 et 37) du pavillon, et, d'autre part, quatre autres patins d'appui (47a, 47b, 47c et 47d) adaptés pour coopérer avec les côtés du pavillon (33), et comprennent en outre un index escamotable (38) destiné à être inséré en partie entre le pavillon (5) et un volet supérieur (40).

9. Dispositif selon la revendication 5, **caractérisé en ce que** ledit élément de carrosserie est un pavillon (5), et **en ce que** les organes d'appui comprennent quatre patins d'appui (49) aptes à s'indexer sur les côtés d'habitacle (36 et 37) du pavillon et adaptés pour coopérer avec les côtés (33) du pavillon, et comprennent en outre un index escamotable (38) destiné à être inséré en partie entre le pavillon (5) et un volet supérieur (40).

10. Procédé mettant en oeuvre un dispositif (1) conforme à l'une quelconque des revendications précédentes, pour l'application d'un film (3) adhésif sur un pavillon (5) de véhicule, ledit film (3) étant recouvert d'un papier support, qui est retiré au cours de la pose dudit film (3) sur ledit pavillon (5).

## Claims

1. Device (1) for positioning at least one flexible adhesive film (3) on at least one part of at least one body member (5) of a motor vehicle, said device comprising:
- a frame (2);
- at least one contact member integral with said frame (2) and adapted for indexing said frame (2) relative to said body member (5); **characterised in that** at least one pin (13) is mounted articulated to said frame (2) between what is known as a tensioning position, in which said pin (13) is adapted to hold said film (3) under tension before said frame (2) is indexed to said body member (5), and what is known as a release position, in which said pin (13) is adapted to release the tension, at least in part, of said film (3) when said frame is indexed to said body member (5); and
- resilient means for returning said pin (13) to the tensioning position thereof.

2. Device according to claim 1, wherein said pin (13) is mounted pivotably on at least one connecting rod (16) and on a rod (18) on which said resilient return means act.

3. Device according to either claim 1 or claim 2, **characterised in that** the release position is a position in which the pin (13) makes it possible for said film to escape (3).

4. Device according to any one of the preceding claims, **characterised in that** said pins (13) are distributed in groups of two on said frame, in such a way that they are adapted to hold at least one film (3), of a substantially rectangular shape, by the corners thereof.

5. Device according to any one of the preceding claims, **characterised in that** the contact members are contact pads (35a, 35b, 35c, 35d, 41 a, 41 b, 47a, 47b, 47c, 47d and 49) adapted to cooperate with said body member (5) so as to provide an isostatic position of said frame (2) relative to said body member (5).

6. Device according to claim 5, **characterised in that** said body member is a roof (5), and **in that** the contact members comprise four contact pads (35a, 35b, 35c and 35d) adapted to be indexed to the passenger compartment sides (36, 37) of the roof, and further comprise a retractable index (38) which is to be inserted in part between the roof (25) and an upper flap (40).

7. Device according to claim 5, **characterised in that** said body member is a roof (5), and **in that** the contact members comprise, on the one hand, two contact pads (35a and 35b) adapted to be indexed to one of the passenger compartment sides (36, 37) of the roof and, on the other hand, two further contact pads (41 a and 41 b) adapted to cooperate with a channel (43) of the roof, and further comprise a contact member (42) which is to cooperate with a rear dolly (45) located to the side of said channel (43).

8. Device according to claim 5, **characterised in that** said body member is a roof (5), and **in that** the contact members comprise, on the one hand, four contact pads (35a, 35b, 35c and 35d) adapted to be indexed to the passenger compartment sides (36 and 37) of the roof and, on the other hand, four further contact pads (47a, 47b, 47c and 47d) adapted to cooperate with the sides (33) of the roof, and further comprise a retractable index (38) which is to be inserted in part between the roof (5) and an upper flap (40).

9. Device according to claim 5, **characterised in that** said body member is a roof (5), and **in that** the contact members comprise four contact pads (49) adapted to be indexed to the passenger compartment sides (36 and 37) of the roof and adapted to cooperate with the sides (33) of the roof, and further comprise a retractable index (38) which is to be inserted in part between the roof (5) and an upper flap (40).

10. Method, using a device (1) in accordance with any one of the preceding claims, for applying an adhesive film (3) to a vehicle roof (5), said film (3) being covered with a base paper which is removed in the course of positioning said film (3) on said roof (5).

## Patentansprüche

1. Vorrichtung (1) zum Aufsetzen zumindest einer weichen Klebefolie (3) auf zumindest einem Teil zumindest eines Karosserieelements (5) eines Kraftfahrzeugs, wobei diese Vorrichtung Folgendes umfasst:
- einen Rahmen (2);
- zumindest ein mit dem Rahmen (2) fest verbundenes Auflageorgan, das dafür geeignet ist, eine Indexierung des Rahmens (2) relativ zu dem Karosserieelement (5) zu ermöglichen;
**dadurch gekennzeichnet, dass** zumindest ein Stift (13) an dem Rahmen (2) angelenkt ist zwischen einer so genannten Spannstellung, in welcher der Stift (13) in der Lage ist, die Folie (3) vor der Indexierung des Rahmens (2) an dem Karosserieelement (5) unter Spannung zu halten, und einer so genannten Lösestellung, in welcher der Stift (13) in der Lage ist, die Spannung der Folie (3), zumindest zum Teil, zu lösen, wenn der Rahmen an dem Karosserieelement (5) indexiert ist; und
- Federmittel für die Rückstellung des Stiftes (13) in Richtung seiner Spannstellung.

2. Vorrichtung nach Anspruch 1, wobei der Stift (13) an zumindest einer Gelenkstange (16) und an einer Stange (18) schwenkbar gelagert ist, auf welche die Rückstellfedermittel einwirken.

3. Vorrichtung nach den Ansprüchen 1 oder 2, **dadurch gekennzeichnet, dass** die Lösestellung eine Stellung ist, in welcher der Stift (13) die Freigabe der Folie (3) ermöglicht.

4. Vorrichtung nach einem der vorhergehenden Ansprüche, **dadurch gekennzeichnet, dass** die Stifte (13) in Zweier-Gruppen auf dem Rahmen derart verteilt sind, dass sie in der Lage sind, zumindest eine Folie (3), mit im Wesentlichen rechteckiger Form, an ihren Ecken festzuhalten.

5. Vorrichtung nach einem der vorhergehenden Ansprüche, **dadurch gekennzeichnet, dass** die Auflageorgane Auflageplatten (35a, 35b, 35c, 35d, 41 a, 41 b, 47a, 47b, 47c, 47d und 49) sind, die für das Zusammenwirken mit dem Karosserieelement (5) geeignet sind, um eine isostatische Stellung des Rahmens (2) relativ zu dem Karosserieelement (5) sicherzustellen.

6. Vorrichtung nach Anspruch 5, **dadurch gekennzeichnet, dass** das Karosserieelement ein Dach (5) ist und dass die Auflageorgane vier Auflageplatten (35a, 35b, 35c und 35d) umfassen, die an den Fahrgastzellenseiten (36, 37) des Dachs indexierbar sind, und ferner einen versenkbaren Index (38) umfassen, der dafür bestimmt ist, zum Teil zwischen dem Dach (25) und einer oberen Klappe (40) eingesetzt zu werden.

7. Vorrichtung nach Anspruch 5, **dadurch gekennzeichnet, dass** das Karosserieelement ein Dach (5) ist und dass die Auflageorgane einerseits zwei Auflageplatten (35a und 35b), die an den Fahrgastzellenseiten (36, 37) des Dachs indexierbar sind, und andererseits zwei Auflageplatten (41 a und 41 b), die für das Zusammenwirken mit einer Rinne (43) des Dachs bestimmt sind, umfassen und ferner ein Auflageorgan (42) umfassen, das für das Zusammenwirken mit einer hinteren doppelkegeligen Rolle (45) bestimmt ist, die sich auf der Seite der Rinne (43) befindet.

8. Vorrichtung nach Anspruch 5, **dadurch gekennzeichnet, dass** das Karosserieelement ein Dach (5) ist und dass die Auflageorgane einerseits vier Auflageplatten (35a, 35b, 35c und 35d), die an den Fahrgastzellenseiten (36 und 37) des Dachs indexierbar sind, und andererseits vier Auflageplatten (47a, 47b, 47c und 41 d), die für das Zusammenwirken mit den Seiten (33) des Dachs bestimmt sind, umfassen und ferner einen versenkbaren Index (38) umfassen, der dafür bestimmt ist, zum Teil zwischen dem Dach (5) und einer oberen Klappe (40) eingesetzt zu werden.

9. Vorrichtung nach Anspruch 5, **dadurch gekennzeichnet, dass** das Karosserieelement ein Dach (5) ist und dass die Auflageorgane vier Auflageplatten (49) umfassen, die an den Fahrgastzellenseiten (36 und 37) des Dachs indexierbar sind und dafür geeignet sind, mit den Seiten (33) des Dachs zusammenzuwirken, und ferner einen versenkbaren Index (38) umfassen, der dafür bestimmt ist, zum Teil zwischen dem Dach (5) und einer oberen Klappe (40) eingesetzt zu werden.

10. Verfahren unter Verwendung einer Vorrichtung (1) nach einem der vorhergehenden Ansprüche, für die Aufbringung einer Klebefolie (3) auf einem Fahrzeugdach (5), wobei die Folie (3) mit einem Trägerpapier abgedeckt ist, die im Laufe des Aufsetzens der Folie (3) auf dem Dach (5) abgezogen wird.
